(19) Europäisches Patentamt
European Patent Office
Office européen des brevets

(11) **EP 2 476 510 A2**

(12) **EUROPÄISCHE PATENTANMELDUNG**

(43) Veröffentlichungstag:
**18.07.2012 Patentblatt 2012/29**

(51) Int Cl.:
***B23Q 15/04*** *(2006.01)*

(21) Anmeldenummer: **12151462.4**

(22) Anmeldetag: **17.01.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **17.01.2011 DE 102011008754**
**26.01.2011 DE 102011000348**

(71) Anmelder:
• **Grob-Werke GmbH & Co. KG**
**87719 Mindelheim (DE)**
• **Nagel Maschinen- und Werkzeugfabrik GmbH**
**72622 Nürtingen (DE)**

(72) Erfinder:
• **Wassermann, Georg**
**87761 Lauben (DE)**
• **König, Jörg**
**87719 Mindelheim (DE)**
• **Nagel, Bernd**
**72622 Nürtingen (DE)**
• **Mayer, Martin**
**72636 Frickenhausen (DE)**

(74) Vertreter: **Schulz, Manfred et al**
**Pfister & Pfister**
**Patent-& Rechtsanwälte**
**Hallhof 6-7**
**87700 Memmingen (DE)**

(54) **Verfahren zur kombinierten Feinbohr- und Honbearbeitung sowie Bearbeitungsanlage zur Durchführung des Verfahrens**

(57) Die Erfindung betrifft ein Verfahren zur Feinbearbeitung von Innenflächen von Bohrungen in Werkstücken sowie eine Bearbeitungsanlage zur Durchführung dieses Verfahrens. Die Feinbearbeitung erfolgt dabei durch Feinbohren und nachfolgendem Honen mit folgenden Schritten:

Feinbohren einer Bohrung eines Werkstückes mittels eines Feinbohrwerkzeuges, Transfer des Werkstückes in eine Honeinrichtung, Messen der feingebohrten Bohrung mit einer der Honeinrichtung zugeordneten Messeinrichtung und Steuerung des Betriebes der Feinbohreinrichtung in Abhängigkeit von dem durch die Messeinrichtung gewonnenen Bohrungs-Messsignal. Eine dem Transfer unmittelbar vorgeschaltete Ausgansfeinbohrbearbeitung ist als Semi-Finishbearbeitung ausgelegt und wird mit einem Feinbohrwerkzeug durchgeführt, das mindestens eine aussteuerbare Schneide aufweist. Die Position der aussteuerbaren Schneide ist in Abhängigkeit von dem Bohrungs-Messsignal gesteuert. Eine dem Transfer nachgeschaltete Eingangshonbearbeitung trägt ein Aufmaß von mindestens 100 $\mu$m ab.

EP 2 476 510 A2

**Beschreibung**

Die Erfindung bezieht sich auf ein Verfahren geeignet zur Feinbearbeitung von zylindrischen Innenflächen von Bohrungen in Werkstücken durch Feinbohren und nachfolgendes Honen sowie auf eine Bearbeitungsanlage zur Durchführung des Verfahrens. Bevorzugtes Anwendungsgebiet ist die Feinbearbeitung von im Wesentlichen zylindrischen Gleitlagerflächen in Bauteilen für den Motorenbau, insbesondere die Bearbeitung von Zylinderlaufflächen eines Motorblockes oder die Bearbeitung von Pleuelaugen in Pleueln.

Das klassische Honen ist ein Zerspanungsverfahren mit geometrisch unbestimmten Schneiden, bei dem vielschneidige Honwerkzeuge eine aus zwei Komponenten bestehende Schrittbewegung ausführen, die zu einer charakteristischen Oberflächenstruktur der bearbeiteten Innenfläche mit überkreuzten Bearbeitungsspuren führt. Durch Honen sind endbearbeitete Oberflächen herstellbar, die extrem hohen Anforderungen bezüglich Maß- und Formtoleranzen sowie hinsichtlich der Oberflächenstruktur genügen. Dementsprechend werden beispielsweise beim Motorenbau Zylinderlaufflächen, d.h. Innenflächen von Zylinderbohrungen in einem Motorblock oder in einer in einen Motorblock einzubauenden Zylinderhülse, Lagerflächen für Wellen und die zylindrischen Innenflächen in Pleuelaugen einer Honbearbeitung unterzogen. Bei der Bearbeitung von Zylinderlaufflächen werden typischerweise mehrere, unterschiedliche, aufeinanderfolgende Honoperationen durchgeführt, beispielsweise ein Vorhonen mit relativ starkem Materialabtrag zur Erzeugung der gewünschten Makroform der Bohrung und ein Fertighonen mit geringerem Materialabtrag, um die am fertigen Werkstück benötigte Oberflächenstruktur zu erzeugen.

Zur Vorbereitung der zu bearbeitenden Werkstücke für das Honen kann den Honoperationen eine Vorbearbeitung durch Feinbohren vorgeschaltet sein, die manchmal auch als Feindrehen oder Feinspindeln bezeichnet wird. Beispielsweise wird manchmal bei der Bearbeitung von Pleueln zwischen dem Bruchtrennen und dem zur Enbearbeitung dienenden Honen eine Feindrehbearbeitung zwischengeschaltet. Geeignete Feinbohr-Operationen dienen dazu, die gewünschte Position und Winkellage der Bohrung festzulegen. Damit kann in der nachfolgenden Honoperation der Bohrung mit einem kardanisch oder auf andere Weise begrenzt beweglich gelagerten Honwerkzeug der durch die Feinbohroperation festgelegten Bohrungsachse nachgefahren werden. Eine wesentlich Aufgabe der Honoperation mit einem im Vergleich zum Feinbohren geringeren Aufmaß ist die Erzeugung der geforderten Oberflächenrauheit, der Zylinderform und des Durchmessers.

Ein gattungsgemäßes Verfahren und eine gattungsgemäße Bearbeitungsanlage sind aus der internationalen Patentanmeldung WO 2008/009411 bekannt.

Ausgehend von diesem Stand der Technik ist es Aufgabe der vorliegenden Erfindung, die Prozesskette Feinbohren-Honen effizienter zu gestalten.

Zur Lösung dieser Aufgaben stellt die Erfindung ein Verfahren mit den Merkmalen von Anspruch 1 sowie eine Bearbeitungsanlage mit den Merkmalen von Anspruch 30 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß einer Formulierung der Erfindung hat ein Verfahren zur Feinbearbeitung von Innenflächen von Bohrungen in Werkstücken durch Feinbohren und nachfolgendes Honen folgende Schritte:

Feinbohren mindestens einer Bohrung eines Werkstückes mittels eines Feinbohrwerkzeuges einer Feinbohreinrichtung zur Erzeugung einer feingebohrten Bohrung;

Transfer des Werkstückes in eine Bearbeitungsposition einer Honeinrichtung zur Bearbeitung der feingebohrten Bohrung mittels eines Honwerkzeuges der Honeinrichtung;

Messen der feingebohrten Bohrung mittels einer der Honeinrichtung zugeordneten Messeinrichtung zur Erzeugung mindestens eines die Eigenschaften der feingebohrten Bohrung repräsentierenden Bohrungs-Messsignals; und

Steuerung des Betriebs der Feinbohreinrichtung in Abhängigkeit von dem Bohrungs-Messsignal; wobei eine dem Transfer unmittelbar vorgeschaltete, als Semi-Finishbearbeitung ausgelegte Ausgangsfeinbohrbearbeitung vorgesehen ist und die Ausgangsfeinbohrbearbeitung mit einem Feinbohrwerkzeug durchgeführt wird, das mindestens eine aussteuerbare Schneide aufweist, wobei die Position der aussteuerbaren Schneide in Abhängigkeit von dem Bohrungs-Messsignal gesteuert wird und dass bei einer dem Transfer nachgeschalteten Eingangshonbearbeitung ein Aufmaß von mindestens 100 μm abgetragen wird.

Eine zur Durchführung des Verfahrens geeignete Bearbeitungsanlage zum Feinbearbeiten zylindrischer Innenflächen von Bohrungen in Werkstücken durch Feinbohren und nachfolgendes Honen umfasst:

eine Feinbohreinrichtung mit mindestens einer Feinbohrspindel zum Tragen eines Feinbohrwerkzeuges sowie eine Feinbohrsteuerung zur Steuerung des Betriebs der Feinbohreinrichtung;

eine Honeinrichtung mit mindestens einer zum Tragen eines Honwerkzeuges eingerichteten Honspindel sowie einer Honsteuerung zur Steuerung des Betriebs der Honeinrichtung;

wobei die Honeinrichtung mindestens eine Messeinrichtung zur Messung einer durch die Feinbohreinrichtung bearbeiteten feingebohrten Bohrung und zur Erzeugung eines die Beschaffenheit der feingebohrten Bohrung repräsentierenden Bohrungs-Messsignals aufweist und die Feinbohrsteuerung zur Steuerung des Betriebs des Feinbohreinrichtung in Abhängigkeit von dem Bohrungs-Messsignal konfiguriert ist.

Die Erfindung sieht vor, dass ein größerer Anteil des Abtrags von der Feinbohrbearbeitung beziehungsweise vom Feinbohren in Richtung Honen verlagert wird. Daher wird erfindungsgemäß vorgeschlagen, dass die dem Transfer nachgeschaltete Eingangshonbearbeitung ein Aufmaß von mindestens 100 µm abträgt.

Im Vergleich zu Bohrwerkzeugen, die mit geometrisch bestimmten Schneiden arbeiten, haben Honwerkzeuge eine erheblich höhere Standzeit, so dass größere Stückzahlen ohne Werkzeugwechsel bearbeitet werden können. Während bei Bohrwerkzeugen ein Verschleiß der geometrisch bestimmten Schneiden zu einer allmählichen Veränderung der Eingriffsverhältnisse und damit zu einer Verschlechterung von Oberflächengüte und Formgenauigkeit führen kann, bleibt die Schneidleistung von Honwerkzeugen aufgrund des Selbstschärfungseffektes der mit gebundenen Schneidkörnern versehenen Schneidgruppen während der gesamten Standzeit im Wesentlichen konstant, so dass auch bei großen Stückzahlen bearbeiteter Werkstücke und größerem Abtrag pro Bohrung weitgehend gleichbleibende Qualitäten von Form und Oberflächenmikrostruktur erzielbar sind.

Es wird zum Beispiel vorgesehen, dass eine dem Transfer unmittelbar vorgeschaltete Ausgangsfeinbohrbearbeitung als Semi-Finishbearbei-tung ausgelegt ist. Im Stand der Technik ist die spanabhebende Bearbeitung mit einer geometrisch bestimmten Schneide aufgeteilt in eine Vorbearbeitung beziehungsweise Schruppvorgang (Grobbohrbearbeitung), eine Semi-Finishbearbeitung und eine Finishbearbeitung. Die höchste Qualität der bearbeiteten Oberfläche auf der Feinbohrseite wies die Finishbearbeitung auf. Diese Qualitätsstufe wird auf Seiten der Feinbearbeitung nicht mehr benötigt, diese Finishbearbeitung wird eingespart.

Bei einer Verlagerung eines Teils der Bearbeitungsaufgabe weg vom Feinbohren hin zum Honen kann somit die Produktivität des Gesamtprozesses gesteigert werden.

Zusätzlich wird dadurch, dass die Position der aussteuerbaren Schneide automatisch in Abhängigkeit von dem Bohrungs-Messsignal gesteuert wird, eine ständige oder zeitnahe Verschleißkompensation bei der Ausgangsfeinbohroperation möglich, so dass vor allem Durchmesserschwankungen der Bohrungen in den an die erste Honstation übergebenen Werkstücke im Vergleich zu herkömmlichen Verfahren wesentlich reduziert werden können. Diese Streuungen wurden herkömmlich reduziert, indem der Semi-Finishbearbeitung eine Finishbearbeitung (Feinbohren mit geringem Materialabtrag) nachgeschaltet war, um Durchmesserfehler nach der Semi-Finishbearbeitung noch durch eine weitere Feinbohroperation zu korrigieren. Diese Feinbohrstation, die normalerweise über die Messergebnisse einer separaten Nachmessstation gesteuert wurde, kann somit entfallen. Die erste Honstufe (Eingangshonoperation) kann für geringere Durchmesserschwankungen ausgelegt sein, was die Optimierung für hohen Materialabtrag erleichtert. Andererseits können die Spezifikationen für den letzten Feinbearbeitungsschritt hinsichtlich Rundheit, Geradheit und Parallelität sowie Oberflächenrauheit entspannt werden.

Im Stand der Technik war es auch bekannt, nach der Finishbearbeitung eine, der Feinbearbeitung zugeordnete Messstation vorzusehen, die Eigenschaften der feingebohrten Bohrung repräsentierende Bohrmesswerte ermittelte. Der erfindungsgemäße Vorschlag verzichtet auf diese gesonderte der Honeinrichtung vorgeschalteten Messstation wodurch ebenfalls Kosten für den Betrieb des erfindungsgemäßen Verfahrens wie für die erfindungsgemäße Bearbeitungsanlage reduziert werden.

Der Begriff "Ausgangsfeinbohrbearbeitung" bezeichnet hier die letzte Bearbeitungsstufe, bei der ein spanendes Bearbeitungswerkzeug mit bestimmten Schneiden, typischerweise ein Feinbohrwerkzeug, zum Einsatz kommt.

Der Begriff "Eingangshonbearbeitung" bezeichnet hier die einer letzen Bearbeitung mit bestimmten Schneiden folgende erste Honbearbeitungsstufe. Bei einer konventionellen mehrstufigen Honbearbeitung entspricht die Eingangshonbearbeitung hinsichtlich ihrer Position in der Prozesskette normalerweise dem "Vorhonen".

Im Zusammenhang mit dieser Anmeldung werden Aufmaße, Abträge, Übermaße, Maße zur Rundheit, Geradheit oder Parallelität immer auf den Durchmesser der Bohrung bezogen.

Soweit im Rahmen dieser Anmeldung von Zylindern oder zylindrischen Innenflächen gesprochen wird, ist dies gleichbedeutend zu jedweden Prismen, oder prismatischen Innenflächen, z.B. mit elliptischer Grundfläche. Aufgrund der höheren Standzeiten des Honwerkzeuges im direkten Vergleich mit einem Bearbeitungswerkzeug mit geometrisch bestimmten Schneiden, ist es in einer Weiterentwicklung möglich, dass durch die Eingangshonbearbeitung ein Aufmaß von mehr als 150 µm beträgt. Bevorzugt wird bei der Eingangshonbearbeitung, ein Aufmaß von maximal 400 µm abgetragen, vorzugsweise beträgt die Obergrenze 300 µm.

Bei dem Verfahren wird eine nach der Feinbohroperation angeordnete, zur Honeinrichtung gehörende Messeinrichtung dazu verwendet, das Bearbeitungsergebnis der vorangegangenen Feinbohroperation zu ermitteln. Das Bohrungs-Messsignal kann insbesondere Informationen über den Durchmesser und die Makroform der nach dem Feinbohren vorliegenden feingebohrten Bohrung enthalten, z.B. in Bezug auf Maßgenauigkeit, Rundheit, Zylindrizität und/oder Profilierung in Axialrichtung (Konizität, Tonnenform, Vorweite, etc.). Gegebenenfalls können auch Informationen über die Lage der Bohrung in Bezug auf eine Soll-Lage und/oder Informationen über die Oberflächenbeschaffenheit enthalten sein.

Das Messen der feingebohrten Bohrung mittels einer der Honeinrichtung zugeordneten Messeinrichtung, d.h. die Ausgangskontrolle der Feinbohroperation, kann in der für die nachfolgende Honbearbeitung vorgesehenen Bearbeitungsposition des Werkstückes erfolgen, so dass ein Transfer von der Feinbearbeitungseinrichtung zur Honeinrichtung gegebenenfalls ohne Zwischenstop und damit sehr schnell erfolgen kann. Somit kann das Messen der feingebohrten Bohrung mit der Messeinrichtung in der Bearbeitungsposition des Werkstückes in der Honeinrichtung erfolgen.

Es kann beispielsweise eine Honeinrichtung vorgesehen sein, die eine integrierte Messeinrichtung enthält, um eine In-Prozess-Durchmessermessung zur Durchmesserabschaltung des Honprozesses und zur In-Prozess-Korrektur der Bohrungsform zu ermöglichen. Diese In-Prozess-Durchmessermesseinrichtung kann genutzt werden, um vor Beginn der Honbearbeitung bzw. in der Anfangsphase der Honbearbeitung in einer oder mehreren Messebenen den Durchmesser der feingebohrten Bohrung zu erfassen und ein entsprechendes Bohrungs-Messsignal zu erzeugen, das die feingebohrte Bohrung beschreibt. Dieses Bohrungs-Messsignal (oder ein daraus abgeleitetes Signal) kann zur Verschleißkompensation an die Feinbohreinrichtung zurückgeführt werden.

Der Vorschlag umfasst dabei nicht nur die Lösung, bei welcher die Messeinrichtung in der Honeinrichtung integriert ist, sondern auch eine Lösung, in der die Messeinrichtung in der Honeinrichtung als separate Messstation in Materialflussrichtung vor der Eingangshonbearbeitung angeordnet ist. Eine solche Anordnung führt ebenfalls zu einer Verbesserung des Gesamtprozesses.

Für die Messung (ob mit im Honwerkzeug integrierter Messeinrichtung oder mit separater Messstation) der feingebohrten Bohrung ist in vielen Fällen eine relativ hohe Messgenauigkeit vorteilhaft, um eine präzise Steuerung der nachfolgenden Honoperationen zu erlauben. Vorzugsweise wird die feingebohrte Bohrung mit einer Messgenauigkeit von weniger als 10 $\mu$m (bezogen auf den Durchmesser) vermessen, wobei die Messgenauigkeit insbesondere im Bereich zwischen 2$\mu$m und 6$\mu$m liegen kann.

Bei einer Verfahrensvariante wird die feingebohrte Bohrung mit Hilfe mindestens eines an einem Honwerkzeug angebrachten Messsensor vermessen. Das Honwerkzeug, d.h. das Bearbeitungswerkzeug, dient somit als Sensorträger für den Messsensor, so dass die zugeordnete Honspindel und ihre Steuerung dazu genutzt werden können, den Messsensor in die feingebohrte Bohrung einzuführen, gegebenenfalls den Messsensor innerhalb der feingebohrten Bohrung für die Messung zu bewegen und auch nach Abschluss der Messung den Messsensor wieder aus der Bohrung herauszuführen. Erheblicher konstruktiver Aufwand für eine gesonderte Messstation kann somit eingespart werden.

Wird der Messsensor in einer separaten Messstation realisiert, so ist an der Messstation ein separater Sensorträger für den Messsensor vorgesehen, der derart beweglich ist, dass der Messsensor in eine feingebohrte Bohrung einführbar ist.

Gegebenenfalls kann der an dem Honwerkzeug angebrachte Messsensor nach Abschluss der Messung der noch nicht mit Honen bearbeitenden feingebohrten Bohrung auch dazu genutzt werden, während einer nachgefolgten Honoperation den Fortschritt der Honoperation zu überwachen. Es kann sich somit ein mehrfacher Nutzen der zur Honeinrichtung gehörenden Messeinrichtung ergeben, bei gleichzeitig verringertem Aufwand hinsichtlich der für die Manipulation des Messsensors erforderlichen Einrichtungen.

Bei vielen Honprozessen vergehen nach dem Start des Honprozesses einige Zehntelsekunden oder ganze Sekunden, bis das Honwerkzeug bzw. die an dem Honwerkzeug angebrachten Bearbeitungselemente (insbesondere Honleisten, Honsteine) in Bearbeitungseingriff mit der Werkstückoberfläche kommen und damit die feingebohrte Bohrung verändern. Zudem wird häufig die Bohrung während der ersten Zehntelsekunden oder ganzen Sekunden des Honeingriffes nur geringfügig verändert. Daher kann die Zwischenzeit zwischen dem Start des Honprozesses und dem Beginn des substantiellen Materialabtrages zur Erfassung des Bohrungs-Messsignals genutzt werden. Daher wird bei einer Weiterbildung das Bohrungs-Messsignal zur Beschreibung der feingebohrten Bohrung erfasst, während der Honprozess bereits gestartet wurde. Es ist auch möglich, dass das Bohrungs-Messsignal zur Beschreibung der feingebohrten Bohrung vollständig vor Beginn des Honprozesses erfasst wird, also während der Honprozess noch nicht gestartet wurde. Bei manchen Ausführungsformen beginnt die Erfassung des Bohrungs-Messsignales vor dem Start des Honprozesses und erstreckt sich noch in die Anfangsphase des Honprozesses hinein, beispielsweise in diejenige Zeit, in der die Bearbeitungselemente des Honwerkzeuges mit relativ großer Zustellgeschwindigkeit in Richtung der zu bearbeitenden Oberfläche zugestellt werden, bevor der eigentliche Bearbeitungseingriff beginnt. Wenn zumindest ein Teil der für die Erfassung des Bohrungs-Messsignals erforderlichen Messzeit in die Phase nach dem Start des Honprozesses fällt, ergibt sich ein erheblicher Zeitgewinn und Bearbeitungszeiten können verkürzt werden.

Bei der der Honeinrichtung zugeordneten Messeinrichtung können unterschiedliche Messprinzipien alternativ oder in Kombination genutzt werden. Bei manchen Ausführungsformen ist die Messeinrichtung ein pneumatisches Messsystem (auch als "Luftmesssystem" bezeichnet). Messeinrichtungen mit taktilen Messsensoren (Taststiften o.dgl.), kapazitive, induktive und/oder optische Messprinzipien sind ebenfalls möglich.

Bei manchen Verfahrensvarianten wird das Werkstück nach Abschluss der Feinbohroperation von der Feinbohreinrichtung direkt in die Bearbeitungsposition an der Honeinrichtung transferiert. Insbesondere kann es so sein, dass in Materialflussrichtung zwischen der Feinbearbeitungseinrichtung und der Honeinrichtung keine Messeinrichtung zur quantitativen dimensionellen Vermessung der feingebohrten Bohrung vorgesehen ist,.

Gegebenenfalls kann auf dem Transferweg eine "Gebohrt-Kontrolle" vorgesehen sein, die im Sinne einer Ja/ Nein-Entscheidung feststellt, ob eine reguläre Feinbohroperation stattgefunden hat, damit zu Beginn der nachfolgenden Honoperation das Honwerkzeug ohne Kollision mit dem Werkstück in die Bohrung einfahren kann. Diese Kontrolleinrichtung kann einfach und kostengünstig aufgebaut sein, da keine genaue dimensionelle Messung der Bohrung gefordert ist.

Bei manchen Ausführungsformen umfasst die Honeinrichtung eine Nachmesseinrichtung zur Messung der gehonten Bohrung nach Abschluss der (ein- oder mehrstufigen) Honoperation. Die Nachmesseinrichtung erzeugt eines oder mehrere Nachmess-Signale, aus denen Informationen über den Durchmesser, die Makroform und/oder über die Oberflächenbeschaffenheit der gehonten Bohrung ableitbar sind. Diese Informationen können zur Qualifizierung des fertig bearbeiteten Werkstückes genutzt werden.

Die Nachmesseinrichtung kann als stationäre Messeinrichtung mit höherer Messgenauigkeit ausgelegt sein als die hochdynamischen Messeinrichtungen für die In-Prozess-Messung während der Honbearbeitung.

Bei einer Weiterbildung ist die Nachmesseinrichtung signalübertragend mit einer zur Steuerung der Honoperationen vorgesehenen Honsteuerung verbunden und die Honsteuerung ist zur Steuerung des Betriebs der Honeinrichtung in Abhängigkeit von Messsignalen der Nachmesseinrichtung konfiguriert. Da die Nachmesseinrichtung eine vom Bearbeitungsprozess losgelöste stationäre Messung mit hoher Genauigkeit gestattet, kann die Rückführung der Nachmess-Signale zur Honsteuerung zur weiteren Steigerung der Bearbeitungsgenauigkeit genutzt werden, um beispielsweise die Durchmesserstreuung der bearbeiteten Werkstücke zu verringern. Dadurch ist eine größere Stabilität des Bearbeitungsverfahrens bei geringeren Ausschussquoten und engeren Toleranzen erzielbar. Diese zusätzliche Nachmessung und Signalrückführung hat sich als sehr vorteilhaft erwiesen, auch wenn bereits über die an den Honwerkzeugen vorgesehenen Messsensoren eine in-situ Messung der gehonten Bohrung während der Honoperation stattfinden kann.

Eine weitere Produktivitätssteigerung wird dadurch erreicht, dass die Position der aussteuerbaren Schneide automatisch in Abhängigkeit von dem Bohrungs-Messsignal gesteuert wird. Dabei wird in der Steuerung ein laufender Soll-Ist-Vergleich des Bohrungs-Messsignales mit einem Referenzwert durchgeführt und ein auftretender Verschleiß an der geometrisch bestimmten Schneide durch ein Nachstellen beziehungsweise Aussteuern der Schneide sogleich reduziert.

Des Weiteren ist vorgesehen, dass die Ausgangsfeinbohrbearbeitung als positions- und winkelbestimmende Semi-Finishbearbeitung ausgelegt ist. Im Gegensatz dazu ist es alternativ auch möglich, dass die Eingangshonbearbeitung auch eine "Positionshonung" durchführt, das heißt, dieser Arbeitsschritt, anstelle der Ausgangsfeinbohrbearbeitung, Positions- und Winkel der Bohrung vorgibt.

Wenn die Stufe der Eingangshonbearbeitung zum Korrigieren von Winkellage und/oder Position der feingebohrten Bohrung genutzt werden soll, kann vorgesehen sein, dass die Werkstückhaltevorrichtung bei der Eingangshonbearbeitung im Wesentlichen die gleiche Aufnahme bietet wie die Werkstückhaltevorrichtung bei der Ausgangsfeinbohrbearbeitung. Insbesondere ist für diesen Fall eine starre Werkstückhalterung vorzusehen, durch die die Position des Werkstücks in der Bearbeitungsposition in der Honeinrichtung gestellfest festgelegt werden kann. Dadurch wird erreicht, dass das Werkstück bei Auftreten von Querkräften während des Honens nicht seitlich ausweichen kann. Es können die gleichen Indexierungen wie beim Feinbohren vorgesehen sein. Das Werkstück wird so festgelegt, dass die Soll-Lage der Bohrungsachse der durch Honen zu bearbeitenden Bohrung koaxial zur Drehachse der Honspindel liegt. In Verbindung mit einer starren Ankopplung des expandierbaren Honwerkzeugs an die Honspindel (direkt oder über eine starre Antriebsstange) wird dadurch die Möglichkeit geschaffen, die Bohrungsposition und/oder Winkellage durch Honen zu korrigieren, wenn diese Parameter nach Abschluss der Ausgangsfeinbohrbearbeitung noch nicht in der Spezifikation liegen. Das expandierbare Honwerkzeug wird bei nicht optimal positionierter Bohrung dann in der Regel exzentrisch in die Bohrung eingefahren und korrigiert die Bohrungposition und/oder Winkellage beim Expandieren durch anfänglich ungleichmäßigen und dann zunehmend gleichmäßiger werdenden Abtrag im Laufe der Eingangshonbearbeitung. Ist dagegen die Bohrung bereits richtig positioniert, findet automatisch eine zentrische Einführung des Honwerkzeugs statt und die Bohrung wird beim Honen im Zuge der Expansion (Durchmesservergrößerung) des Honwerkzeugs nicht verlagert, sondern lediglich gleichmäßig allseitig bis zum gewünschten Zielmass nach der Eingangshonbearbeitung erweitert.

In einer Weiterentwicklung der Erfindung ist vorgesehen, dass die Eingangshonbearbeitung dem Transfer unmittelbar nachgeschaltet ist. Bei dieser Variante erfolgt ein Transfer direkt von der Ausgangsfeinbohrbearbeitung zur Eingangshonbearbeitung. Eine Pufferung des zu bearbeitenden Werkstückes ist dabei nicht vorgesehen, wodurch die erfindungsgemäße Bearbeitungsanlage kurz baut und die gesamte Bearbeitung zügig abläuft. Bei dieser Variante befindet sich die Messeinrichtung im Honwerkzeug.

Nach dem Vorschlag wird die Qualitätsanforderung an die Bohrung nach der Ausgangsfeinbohrbearbeitung im Vergleich zu herkömmlichen Verfahren abgesenkt, wodurch es möglich ist, in der Ausgangsfeinbohrbearbeitung den Fokus auf höheren Abtrag zu legen, weswegen in einer Weiterentwicklung die Ausgangsfeinbohrbearbeitung für einen Abtrag von mehr als 0,3 mm ausgelegt ist.

Aufgrund der hohen Standzeit des Honwerkzeuges ist es möglich, dass nach Abschluss der Ausgangsfeinbohrbearbeitung die Bohrung ein Untermaß im Bereich von 100 bis 400 μm, bevorzugt im Bereich von 0,2 mm +/-0,05 mm hat und dieses Untermaß bevorzugt von der Eingangshonbearbeitung abgetragen wird.

Durch den Einsatz der Messeinrichtung ist es möglich, den Verlauf des Verschleißes des Feinbohrwerkzeuges zu überwachen und zu kontrollieren. Um eine ausreichende Maßgenauigkeit zu erreichen, ist eine entsprechende Kompensationsanordnung für die Schneide des Feinbohrwerkzeuges beziehungsweise Bohrwerkzeuges vorgesehen. Darüber hinaus umfasst der Vorschlag aber auch die Möglichkeit, dynamisch, also in Abhängigkeit des Verschleißes, an dem Feinbohrwerkzeug den Grad der Zerspanarbeit zwischen der Ausgangsfeinbohrbearbeitung und Eingangshonbearbeitung zu verteilen. Dies erfolgt dabei mit der Maßgabe, dass die Standzeiten des Feinbohrwerkzeuges und des Honwerkzeuges einander möglichst angeglichen oder angepasst werden, um zu erreichen, dass notwendige Werkzeugwechsel die zu einem temporären Ausfall der gesamten Bearbeitungsanlage führen, gleichzeitig durchgeführt werden können und die Werkzeuge somit optimal ausgenutzt werden. Hiervon umfasst ist auch der Vorschlag, die Standzeiten des Feinbohrwerkzeuges und des Honwerkzeugs derart aneinander anzupassen, dass z.B. die Standzeit des Honwerkzeugs ein ganzzahlig Vielfaches der Standzeit des Feinbohrwerkzeuges ist, und somit der Wchsel des Honwerkzeugs gleichzeitig mit dem Wechsel des Feinbohrwerkzeuges erfolgt. Dies führt zu einer weiteren Optimierung und Effizienzsteigerung des Verfahrens.

Um eine wirtschaftliche Feinbearbeitung innerhalb kurzer Taktzeiten zu ermöglichen, wird bei manchen Verfahrensvarianten während der Eingangshonbearbeitung mindestens phasenweise mittels geometrisch unbestimmte Schneiden Material mit einem Zeitspanvolumen $Q_w$ = V/t abgetragen, das deutlich größer ist als beim konventionellen Honen. Insbesondere wird vorgeschlagen, dass während der Eingangshonbearbeitung mindestens phasenweise Material mit einem spezifischen Zeitspanvolumen von mehr als 20 mm$^3$/s durch Zerspanung abgetragen wird. Hierbei ist V das durch Zerspanung abgetrennte Volumen des Werkstücks und t die dafür benötigte Bearbeitungszeit, so dass sich als Dimension [mm$^3$/s] ergibt. Für das Volumen V gilt die Näherung V ≈ (π (D$^2$ - d$^2$) L) / 4, wobei d der (kleinere) Durchmesser der Bohrung vor dem Abtrag, D der (größere) Durchmesser nach dem Abtrag und L die Länge der bearbeiten Bohrung bzw. des im Durchmesser vergrößerten Bohrungsabschnitts ist.

Um eine Vergleichbarkeit von Zahlenwerten zu erreichen, wird das Zeitspanvolumen in dieser Anmeldung auf eine Norm-Bearbeitungszeit t = 20 s (Honzeit) und eine Normlänge L = 20 mm bezogen. Das auf diese Weise normierte Zeitspanvolumen wird in dieser Anmeldung als "spezifisches" Zeitspanvolumen bezeichnet und mit $Q_w$S abgekürzt.

Betrachtet man nun typische Zylinderbohrungen mit Nominaldurchmessern aus dem Bereich von 70 mm bis 80 mm oder mehr, so liegt das spezifische Zeitspanvolumen vorzugsweise bei mehr als 22 mm$^3$/s (für 70 mm). Diese typischen Untergrenzen werden in der Regel deutlich überschritten. Bei einem Nominaldurchmesser 70 mm kann z.B. $Q_w$S > 50 mm$^3$/s, gelegentlich auch $Q_w$S > 100 mm$^3$/s oder sogar $Q_w$S > 150 mm$^3$/s gelten.

Die nachfolgende Tabelle 1 gibt Anhaltspunkte für bevorzugt erreichte minimale spezifische Zeitspanvolumina der Eingangshonbearbeitung als Funktion des Abtrags als Funktion des Bohrungsdurchmessers.

## spezifisches Zeitspanvolumen Qw [mm³/s]

| Nominaldurch-messer [mm] | | 60 | 70 | 80 | 90 |
|---|---|---|---|---|---|
| Abtrag [mm] | | | | | |
| Qw | 0,1 | 9 | 11 | 13 | 14 |
| | 0,2 | 19 | 22 | 25 | 28 |
| | 0,3 | 28 | 33 | 38 | 42 |
| | 0,4 | 38 | 44 | 50 | 57 |

Tabelle 1

Hohe Zeitspanvolumina können u.a. durch unkonventionell hohe Schnittgeschwindigkeiten gefördert werden, welche wiederum von der Drehgeschwindigkeit (Drehzahl) und/oder der Hubgeschwindigkeit des Honwerkzeuges abhängen.

Bei manchen Verfahrensvarianten wird das Honwerkzeug während der Eingangshonbearbeitung mindestens phasenweise mit einer Drehzahl von mehr als 400 U/min gedreht, wobei die Drehzahl vorzugsweise mindestens phasenweise mehr als 800 U/min, insbesondere mehr als 1200 U/min beträgt. Häufig liegt die Drehzahl im Bereich von 1200 U/min bis 2000 U/min, ausnahmsweise auch darüber.

Alternativ oder zusätzlich kann das Honwerkzeug während der Eingangshonbearbeitung mindestens phasenweise mit einer maximalen Hubgeschwindigkeit von mehr als 20 m/min bewegt werden, wobei die maximale Hubgeschwindigkeit vorzugsweise mindestens phasenweise zwischen 30 m/min und 40 m/min liegt, gelegentlich auch bei bis zu 50 m/min. Das Honwerkzeug ist dabei bevorzugterweise aufweitbar ausgebildet.

Der Spindelantrieb der Honmaschine ist dann hinsichtlich maximaler Drehzahl, maximaler Hubgeschwindigkeit und Antriebsleistung entsprechend ausgelegt.

Bei manchen Verfahrensvarianten wird das Honwerkzeug während der Eingangshonbearbeitung zumindest innerhalb eines Bearbeitungszeitintervalls derart angetrieben, dass eine Schnittgeschwindigkeit der Schneidkörper relativ zur Innenfläche der Bohrung mehr als 100m/min beträgt. In manchen Fällen kann die Schnittgeschwindigkeit während des Bearbeitungszeitintervalls mehr als 150m/min betragen. In der Regel liegt die Schnittgeschwindigkeit zumindest phasenweise zwischen 200 m/min und 300 m/min, beziehungsweise zwischen 300 m/min und 400 m/min, in Ausnahmefällen können auch bis zu 500 m/min nützlich sein. Schnittgeschwindigkeiten dieser Größenordnungen (ca. 500 m/min) können z.B. erreicht werden, wenn eine Bohrung mit 80 mm Durchmesser mit Drehzahlen von ca. 2000 U/min bearbeitet wird.

In Verbindung mit Schneidmitteln geeigneter Körnung sind dadurch hohe Abtragsleistungen möglich, um die Taktzeiten der ersten Honbearbeitung gering zu halten.

Bei der Eingangshonbearbeitung werden bevorzugt relativ grobkörnige Schneidmittel verwendet, insbesondere solche mit sehr harten Schneidkörnern, z.B. mit Diamant-Schneidkörnern. Bei der Eingangshonbearbeitung werden vorzugsweise mittlere Korngrößen aus dem Bereich zwischen ca. 70 $\mu$m und ca. 200 $\mu$m (bei Diamantleisten z.B. von D76 bis D181) verwendet, um hohe Abtragsleistungen und gleichzeitig lange Standzeiten bei der Eingangshonbearbeitung zu erhalten.

Bei manchen Ausführungsformen wird die Eingangshonbearbeitung für eine Bohrung mit Durchmesser D innerhalb einer Honzeit H durchgeführt, für die die Bedingung H < 25 s * D/75 gilt. So kann beispielsweise die Honzeit für Bohrungen mit einem Durchmesser von bis zu 80 mm bei 27 Sekunden (s) oder darunter liegen. Im Allgemeinen dauert die Bearbeitung bei größeren Durchmessern, bei denen auch die Bohrungen in der Regel länger sind, etwas länger als bei niedrigeren Bohrungsdurchmessern. Bei Bohrungsdurchmessern zwischen 70 mm und 100 mm können typische Honzeiten von weniger als 30 Sekunden erreicht werden.

Für die Durchführung des Verfahrens können auf der Seite der Honeinrichtung ggf. geeignete, konventionelle Honbearbeitungsanlagen eingesetzt werden. Oft kann mit einer Doppelgelenkstange gearbeitet werden, so dass das Honwerkzeug der Bohrung folgen kann. Dabei ist eine Antriebsstange über ein oberes Gelenk an die Honspindel angekoppelt und das Honwerkzeug ist über ein unteres Gelenk an die Antriebsstande angekoppelt.

Es kann jedoch günstig sein, die Aufhängung bzw. Ankopplung im Hinblick auf die bei bevorzugten Verfahrensvarianten auftretenden hohen Drehgeschwindigkeiten der Honspindel bei der Eingangshonbearbeitung zu modifizieren, um einen einwandfreien ruhigen Rundlauf des Werkzeuges sicherzustellen. Zu diesem Zweck kann anstelle üblicher Honspindeln, die zum Ausgleich von Achsversatz zwischen Honspindel und Bohrung häufig mit zwei Gelenken (oberes, werkzeugfernes Gelenk und unteres, werkzeugnahes Gelenk) ausgestattet sind, eine andere Konstruktion der Honspindel günstig sein. Beispielsweise kann anstelle der üblichen Gelenke auch eine starre Stange mit starr angekoppeltem Honwerkzeug, eine direkte starre Ankopplung des Honwerkzeugs an die Honspindel, ein Schwimmkopf, eine Biegestange, eine Biegestange nur mit einem unteren Gelenk oder eine Biegestange nur mit einem oberen Gelenk eingesetzt werden.

Bei Verwendung einer starren Stange mit starr angekoppeltem Honwerkzeug oder bei einer ebenfalls möglichen starren Ankopplung des Honwerkzeuges direkt an die Honspindel kann im Vergleich zu einer beweglichen Ankopplung des Honwerkzeugs auch bei hohen Drehzahlen ein ruhiger Rundlauf erreicht werden, wodurch die Bearbeitungsqualität auch bei großen Abtragsleistungen sichergestellt werden kann. Da bei dem Verfahren in der Regel die Position und Winkligkeit durch die Vorbearbeitung mit geometrisch bestimmten Schneiden eingestellt wird, wird vorzugsweise das Honwerkzeug in die zu bearbeitende Bohrung zentrisch in Bezug auf die Sollposition der Bohrungsachse eingeführt, um Änderungen der Bohrungsposition und/oder der Winkellage zu vermeiden.

Eine Positionskorrektur mittels der starren Anordnung kann optional vorgesehen sein.

Der Begriff "Biegestange" soll hierbei ein Verbindungselement zur Übertragung einer Drehbewegung von einer Honspindel auf ein Honwerkzeug bezeichnen, welches dazu ausgelegt ist, geringe Abweichungen von der Achsparallelität zwischen Honspindel und Honwerkzeug zu ermöglichen, ohne dass durch resultierende Kräfte die Ergebnisse des Honvorganges beeinträchtigt werden. Die Biegestange kann beispielsweise einen Rohrabschnitt umfassen, der eine Vielzahl von regelmäßig oder unregelmäßig angeordneten und sich über einen Teil der Rohrlänge und einen Teil des Rohrumfangs erstreckenden Öffnungen aufweist. Solche durchbrochenen Rohre haben bei geringer Masse eine hohe Steifigkeit und erlauben den gewünschten Achsversatz. Es kann auch ein dünnwandiges Rohr und/oder ein Rohr aus einem Material mit relativ zu Stahlwerkstoffen geringer Biegefestigkeit verwendet werden. Die Anbringung eines Gelenkes an der Biegestange möglichst in Nähe zum Honwerkzeug, z.B zwischen der Biegestange und dem Honwerkzeug (unteres Gelenk), kann günstig sein, da hierdurch die bei Achsversatz auftretenden Biegemomente auf das Werkzeug reduziert werden können.

Das erfindungsgemäße Verfahren erlaubt eine Aufweitung der Formtoleranzen und Oberflächetoleranzen für das Feinbohren. Hieraus resultiert ein erhebliches Einsparpotential auf der Feinbohrseite. Insbesondere ist es möglich, dass vor der Ausgangsfeinbohrbearbeitung für die Bearbeitung der Bohrung nur noch genau eine weitere Bohrbearbeitung, insbesondere eine Grobbohrbearbeitung mit einem Grobbohrwerkzeug vorgesehen ist. Typischer Weise ist die Grobbohrbearbeitung für einen Abtrag von mindestens 2 bis 3 mm, um maximal 6 bis 8 mm ausgelegt.

Im Hinblick auf die Aufweitungen der Formtoleranzen und Oberflächentoleranzen kann es so sein, dass nach Abschluss der Ausgangsfeinbohrbearbeitung die Bohrung eine Rundheit im Bereich bis zu 0,08 mm, bevorzugt bis 0,05 mm, insbesondere im Bereich von 0,03 bis 0,05 mm hat.

In Bezug auf die Geradheit der Bohrung kann es so sein, dass die Ausgangsfeinbohrbearbeitung so durchgeführt wird, dass nach Abschluss der Ausgangsfeinbohrbearbeitung die Bohrung eine Geradheit im Bereich von bis zu 0,08 mm, bevorzugt bis 0,05 mm, insbesondere im Bereich von 0,03 bis 0,05 mm hat.

In dem gleichen Maßinterval (von bis zu 0,08 mm, bevorzugt bis 0,05 mm, insbesondere im Bereich von 0,03 bis 0,05 mm) liegt vorzugsweise auch die Parallelität der Bohrung, die nach Abschluss der Ausgangsfeinbohrbearbeitung besteht.

Ein Vorzug liegt auch darin, dass die Anforderungen für die mittlere Rauheit der Innenfläche der Bohrung abgesenkt werden können. So reicht es aus, dass die Ausgangsfeinbohrbearbeitung so durchgeführt wird, dass nach Abschluss der Ausgangsfeinbohrbearbeitung die Innenfläche der Bohrung eine mittlere Rauheit im Bereich von 20 $\mu$m bis 100 $\mu$m, insbesondere von 25 $\mu$m bis 80$\mu$m, bevorzugt von 30$\mu$m bis 50 $\mu$m hat.

Für die Ausgestaltung des in der Ausgangsfeinbohrbearbeitung eingesetzten Feinbohrwerkzeugs gibt es mehrere alternativ einsetzbare Varianten, insbesondere folgende: Bei einem ersten Vorschlag besitzt das in der Ausgangsfeinbohrbearbeitung eingesetztes Feinbohrwerkzeug eine oder mehrere aussteuerbare Schneiden und eine oder mehrere feste Schneiden, die derart im Bezug aufeinander axial versetzt angeordnet sind, dass die festen Schneiden bei einem in die Bohrung hinein verlaufenden Vorwärtshub vorauseilen.

In einer weiteren Variante sind ausschließlich mehrere in Umfangsrichtung zueinander versetzte, aussteuerbare Schneiden und keine feste Schneiden vorgesehen, wobei vorzugsweise insgesamt 5 aussteuerbare Schneiden angeordnet sind. Für die Positionierbarkeit beziehungsweise Aussteuerbarkeit der Schneiden ist ein entsprechender Verstellantrieb, zum Beispiel über eine Schubstange oder ähnlichem, vorgesehen.

Durch den Einsatz eines Zweifach-Schnittverfahrens bei der Ausgangsfeinbohrbearbeitung wird in einem Bearbeitungsschritt sowohl die feststehenden, wie auch die aussteuerbaren Schneiden eingesetzt. Dabei ist vorgesehen, dass unter Verwendung eines Feinbohrwerkzeuges mit mindestens einer aussteuerbaren und mindestens einer festen Schneide bei einem in die Bohrung hineinverlaufenden Vorwärtshub die aussteuerbare Schneide zurückgezogen und nur die feste Schneide im Eingriff mit der Bohrung ist und bei einem aus der Bohrung heraus verlaufenden Rückwärtshub die aussteuerbare Schneide derart ausgefahren ist, dass nur die aussteuerbare Schneide im Eingriff mit der Bohrung ist. Da sowohl Vorwärtshub wie auch Rückwärtshub in der Ausgangsfeinbohrbearbeitung Zerspanarbeit leistet, resultiert ein effizientes Verfahren beziehungsweise eine effizientere Bearbeitung.

In diesem Zusammenhang wird darauf hingewiesen, dass alle im Bezug auf die Bearbeitungsanlage beschriebenen Merkmale und Eigenschaften aber auch Verfahrensweisen sinngemäß auch bezüglich der Formulierung des Verfahrens übertragbar und im Sinne des Vorschlags einsetzbar sind und als mitoffenbart gelten. Gleiches gilt auch in umgekehrter Richtung, das bedeutet, nur im Bezug auf das Verfahren genannte, bauliche, also vorrichtungsgemäße Merkmale können auch im Rahmen der Ansprüche für die Bearbeitungsanlage berücksichtigt und beansprucht werden und zählen ebenfalls zur Offenbarung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im folgenden näher erläutert.

Fig. 1     zeigt eine schematische Ansicht einer Ausführungsform einer Bearbeitungsanlage zur kombinierten Feinbohr- und Honbearbeitung zylindrischer Innenflächen von Bohrungen in Werkstücken und

Fig. 2     zeigt einen Axialschnitt durch eine im Wesentlichen zylindrischen Bohrung, die nach Abschluss der Feinbohroperation einen Zylindrizitätsfehler mit endseitigen Durchmessererweiterungen besitzt und in drei axial beanstandeten Messebenen vermessen wird.

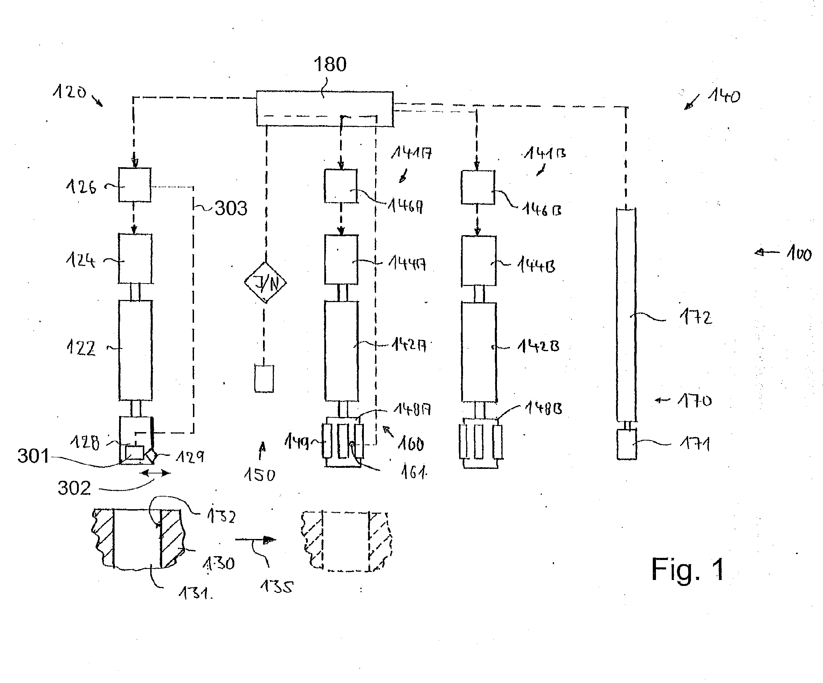

In Fig. 1 ist eine schematische Darstellung einer Ausführungsform einer Bearbeitungsanlage 100 zum Feinbearbeiten zylindrischer Innenflächen von Bohrungen in Werkstücken durch Feinbohren und nachfolgendes Honen gezeigt. Die Bearbeitungsanlage umfasst eine Feinbohreinrichtung 120 sowie eine Honeinrichtung 140, die im Beispielsfall auf einem gemeinsamen Maschinenbett (nicht gezeigt) aufgebaut sind, bei anderen Ausführungsformen jedoch auch getrennt voneinander aufgestellte Maschinenbetten haben können.

Die Feinbohreinrichtung 120 umfasst eine Feinbohrspindel 122, deren starr geführte Spindelachse im Wesentlichen vertikal ausgerichtet ist und die mit Hilfe eines Spindelantriebs 124 vertikal bewegt und um die Spindelachse gedreht werden kann. An das freie untere Ende der Feinbohrspindel ist ein Feinbohrwerkzeug 128 starr angekoppelt, an dessen Umfang eine aus Hartmetall bestehende Schneidplatte angebracht ist, die als Bohrerspitze 129 dient. Mit Hilfe einer Verstelleinrichtung 300 kann die radiale Position (durch den Doppelpfeil 302 angedeutet) der Bohrerspitze 129 verstellt und damit der Durchmesser der feinzubohrenden Bohrung festgelegt werden. Die Verstelleinrichtung 300 umfasst dabei einen Verstellantrieb 301, der über die Steuerleitung 303 mit der Feinbohrsteuereinheit 126 in Verbindung steht. Die Axialbewegung und die Rotationsbewegung der Feinbohrspindel sowie die Zustellung (Doppelpfeil 302) der Bohrerspitze werden über eine Feinbohr-Steuereinheit 126 gesteuert. Bei typischen Feinbohroperation wird mit Drehzahlen zwischen ca. 1000 und ca. 3000 U/min und Vorschubgeschwindigkeiten zwischen ca. 200 und ca. 1000 m/min gearbeitet. Typische Schnitttiefen (Materialabtrag) bezogen auf den Durchmesser liegen normalerweise zwischen 0,1 mm und 1 mm. Abweichungen von diesen typischen Parameterbereichen sind in Ausnahmefällen möglich. Die in Fig. 1 gezeigte Feinbohreinrichtung 120 ist eine dem Transfer unmittelbar vorangestelle Ausgangsfeinbohrbearbeitung und für eine Semi-Finishbearbeitung ausgelegt.

Die zweispindlige Honeinrichtung 140 umfasst zwei im Wesentlichen identisch aufgebaute Honeinheiten 141A und 141 B. Die im Materialflussrichtung erste Honeinheit 141A entspricht der Eingangshonbearbeitung. Jeder der Honeinheiten hat eine vertikale Honspindel 142A bzw. 142B, die über einen Spindelantrieb 144A bzw. 144B so angetrieben wird, dass die Honspindel bei der Honbearbeitung vertikal oszillierende Arbeitsbewegungen ausführt, denen eine Rotationsbewegung um die vertikale Drehachse überlagert ist. Eine erste Honsteuereinheit 146A bzw. eine zweite Honsteuereinheit 146B steuern die Arbeitsbewegungen der Honspindeln. Am unteren freien Ende der ersten Honspindel 142A ist ein erstes Honwerkzeug 148A begrenzt beweglich angekoppelt, mit dem unmittelbar im Anschluss an die Feinbohroperation eine Vorhonoperation an der feingebohrten Bohrung durchführbar ist. Das zweite Honwerkzeug 148B ist für eine Fertighonoperation ausgelegt, mit der die angestrebte Makroform und Oberflächenstruktur der feinbearbeiteten Bohrung erzielt wird. Da der Aufbau solcher Honeinheiten insoweit grundsätzlich bekannt ist, wird er hier nicht näher erläutert.

Die Honeinrichtung 140 hat mehrere Kontroll- und Messsysteme zur Kontrolle bzw. zur Vermessung des bearbeiteten Werkstückes vor, während und nach der Honbearbeitung. Zwischen der Feinbohreinrichtung 120 und der ersten Honeinheit 141A ist eine Bohrungskontrolleinrichtung 150 angeordnet, die dafür ausgelegt ist, festzustellen, ob das von der Feinbohreinrichtung kommende Werkstück von der Feinbohreinrichtung tatsächlich in die erwartete Makroform gebracht wurde, die eine anschließende Honbearbeitung durch die Honeinheiten 141A und 141 B erlaubt. Mit Hilfe der Bohrungskontrolleinrichtung 150 kann insbesondere eine "Gebohrt-Kontrolle" durchgeführt werden, um beispielsweise festzustellen, ob die Bohrspitze 129 der Feinbohreinrichtung noch weitgehend intakt oder über die Toleranzgrenzen hinaus verschlissen bzw. gebrochen ist. Im Falle eines Bohrspitzenbruches würde der festgestellte Durchmesser der von der Feinbohreinrichtung kommenden Bohrung deutlich geringer sein als der nach einem korrekten Feinbohrvorgang vorliegende Bohrungsdurchmesser, wodurch die nachfolgenden Honoperationen erschwert bzw. im ungünstigsten Fall unmöglich gemacht würden. Zudem kann es bei zu kleinen Bohrungen am Beginn der Honbearbeitung zu Kollisionen des ersten Honwerkzeuges 148A mit dem Werkstück kommen, die vermieden werden sollen. Da für die Gebohrt-Kontrolle lediglich eine qualitative oder grob quantitative Prüfung mit einer Genauigkeit in der Größenordnung von ca. 50 $\mu$m oder darüber ausreicht, kann die Bohrungskontrolleinrichtung relativ einfach aufgebaut sein. Geeignete Bohrungskontrolleinrichtungen sind an vielen herkömmlichen Honanlagen vorhanden und können für diesen Zweck verwendet werden.

Weiterhin hat die Honeinrichtung eine in die erste Honeinheit 141A integrierte Messeinrichtung 160, die sowohl der Eingangskontrolle der von der Feinbohreinrichtung kommenden, feingebohrten Bohrung als auch der Überwachung des Bearbeitungsfortschritts im Verlauf der ersten Honoperation dient. Die Messeinrichtung 160 ist als pneumatisch arbeitende "Luftmesseinrichtung" ausgelegt. Sie umfasst ein Paar von Messdüsen 161, die am Honwerkzeug 148A diametral gegenüberliegend zwischen den Honleisten 149 angeordnet sind. Den Messdüsen wird, beispielsweise über einen Ringverteiler, ein Luftstrom zugeleitet. Der in dem System herrschende Luftdruck wird innerhalb der Messeinrichtung analysiert und ermöglicht es, den Abstand zwischen den Luftmessdüsen 161 und der Bohrungswand zu messen. Der Messbereich typischer geeigneter Luftmesssysteme reicht in der Regel bis ca. 150 $\mu$m (in Sonderfällen bis ca. 300 $\mu$m), wobei mit dem dynamischen System Messgenauigkeiten in der Größenordnung zwischen ca. 2 $\mu$m und 5 $\mu$m erzielbar sind.

Die Messeinrichtung 160 ist über die Messleitung 304 mit der Steuerung 180 verbunden und übermittelt über diese Messleitung 304 Bohrungs-Messsignale, die Eigenschaften der feingebohrten Bohrung repräsentieren, zum Beispiel entsprechende Dimensionsangaben wie Durchmesser der Bohrung, Rundheit der Bohrung, Geradheit der Bohrung, Parallelität der Bohrung oder die Rauheit der Innenfläche der Bohrung.

Anstelle von Integration der Messeinrichtung 160 in der ersten Honeinheit 140A, die für die Eingangshonbearbeitung ausgeführt ist, ist in einem alternativen Konzept (nicht gezeigt) vorgesehen, dass eine den Honeinrichtungen zugeordnete separate, also eigenständige, Messstation realisiert ist, die ebenfalls die vorbeschriebenen Bohrungsmesswerte ermittelt und über eine Messleitung an die Steuerung 180 überträgt.

Die Steuerung 180 führt aufgrund der übermittelten Bohrungs-Messsignale beziehungsweise Messwerte einen Soll-Ist-Vergleich durch und gibt dann eine entsprechende Korrekturposition an die Feinbearbeitungssteuereinheit 126 aus.

Das Feinbohrwerkzeug besitzt eine von einem Verstellantrieb 301 bewegbare Schneide 129. Der Verstellantrieb 301 ist über eine Steuerleitung 303 entweder mit der Steuerung 180 direkt oder mit der Feinbohrsteuereinheit 126 verbunden. Über die Steuerleitung 303 gelangt die Korrekturposition zu dem Verstellantrieb 301, aufgrund dessen dann eine radiale Positionierung der Bohrspitze 129 erfolgt. Hierdurch ist es möglich, einen Verschleiß an der Bohrerspitze 129 automatisch zu kompensieren oder auch die Spanarbeit zwischen Bohr- und Honwerkzeug dynamisch zu verteilen.

Beide Lösungen, das heißt die Lösung, bei welcher eine Messeinrichtung 160 in dem Honwerkzeug integriert ausgeführt ist, wie auch die Anordnung einer Messeinrichtung in einer separaten Messstation der Honeinrichtung, wobei das aufgenommene Bohrungs-Messsignal zur Kompensation beziehungsweise Korrektur der Position der Bohrerspitze 129 beziehungsweise Schneide 29 durch den Verstellantrieb 301 dient, können je nach Anwendungsfall günstig sein.

Insbesondere ist eine automatische Nachführung der Position der Bohrerspitze 129 in einer Weiterbildung vorgesehen

Die zweite Honeinheit kann ebenfalls eine entsprechend aufgebaute oder nach einem anderen Messprinzip funktionierende Messeinrichtung mit in das Honwerkzeug 148B integrierten Messsensoren haben, es ist jedoch für die vorliegende Erfindung auch eine Ausgestaltung ohne integrierte Messeinrichtung möglich.

In Materialflussrichtung hinter den Honeinheiten ist eine Nachmesseinrichtung 170 angebracht, zu der ein Nachmesskopf 171 gehört, der mit Hilfe einer Messspindel 172 in die fertig gehonte Bohrung eingefahren, gegebenenfalls innerhalb dieser Bohrung bewegt und wieder aus der Bohrung herausgezogen werden kann. Die Nachmesseinrichtung 170 ist signalleitend mit der übergeordneten Steuerung 180 der Honeinrichtung verbunden, so dass die im Nachmesssignal der Nachmesseinrichtung enthaltene Information über Durchmesser, Makroform und Oberflächenbeschaffenheit der Bohrung über die Honsteuerung 180 verarbeitet und zur Steuerung der Honbearbeitung mit Hilfe der Honspindeln genutzt werden kann.

Die Feinbohr-Steuereinheit 126 ist signalleitend mit der Steuerung 180 der Honeinrichtung verbunden. Dadurch ist es insbesondere möglich, die von der Messeinrichtung 160 der Honeinrichtung stammenden Signale zur Steuerung des Betriebs der Feinbohreinrichtung zu verarbeiten. Die Funktionen der Feinbohr-Steuereinheit 126 und der Steuerung 180 der Honeinrichtung können innerhalb einer Gesamt-Steuereinrichtung der Bearbeitungsanlage integriert sei, z.B. in einem Steuer-Rechner. Bei Zwischenschaltung einer geeigneten Schnittstelle ist auch eine getrennte Konfiguration möglich, so dass ggf. eine im Wesentlichen autark aufgebaute Feinbohreinrichtung mit einer im Wesentlichen autark aufgebauten Honeinrichtung zum Aufbau einer erfindungsgemäßen Bearbeitungsanlage verwendet werden können, wenn die Möglichkeit besteht, das Bohrungs-Messsignal der Honeinrichtung auf die Feinbohreinrichtung zurückzuführen.

Die Bearbeitungsanlage 100 kann wie nachfolgend beschrieben arbeiten. Der Betrieb der Bearbeitungsanlage wird beispielhaft anhand der Bearbeitung eines Motorblocks 130 für eine Brennkraftmaschine beschrieben, der mehrere Zylinderbohrungen 131 enthält, deren Innenflächen 132 durch Feinbohren und nachfolgendes Honen bearbeitet werden sollen, um nach Abschluss der Honbearbeitung als Gleitpartner für Kolbenringe des Motors zu dienen. Das Werkstück 130 ist auf einer nicht gezeigten Aufspannplatte aufgespannt und wird mit Hilfe geeigneter Fördereinrichtungen in Materialflussrichtung 135 zu den einzelnen Bearbeitungsstationen der Bearbeitungsanlage und von diesen wegbewegt.

Zunächst wird das Werkstück 130 für die Feinbohr-Bearbeitung in eine Bearbeitungsposition gebracht, die es erlaubt, das Feinbohrwerkzeug 128 durch vertikale Abwärtsbewegung der Feinbohrspindel in die Bohrung 131 einzuführen. Dann wird die Bohrung 131 mit Hilfe des Feinbohrwerkzeugs 128 feingebohrt, um eine feingebohrte Bohrung zu erzeugen, die gegenüber der angestrebten Sollform nach Ende der Honbearbeitung ein relativ großes Untermaß von beispielsweise 200 $\mu$m im Durchmesser hat. Zur Erzielung des gewünschten Durchmesser wird die radiale Position der Bohrerspitze mit Hilfe der Feinbohrsteuerung 126 bis auf den gewünschten Endwert zugestellt. Nach Ende der Feinbohroperation wird die Bohrerspitze zurückgezogen und das Feinbohrwerkzeug nach oben aus der feingebohrten Bohrung abgezogen.

Das Werkstück 130 wird danach in den Bereich der BohrungsKontrolleinrichtung 150 verfahren. Diese überprüft mittels eines Kontrollsensors, ob der Durchmesser der feingebohrten Bohrung oberhalb eines vorgegebenen Grenzwertes liegt, so dass eine Einführung der Honwerkzeuge in den nachfolgenden Honstufen gefahrlos möglich ist. Sollte es beim Feinbohrvorgang zum Bruch der Bohrspitze gekommen sein oder das Feinbohrwerkzeug durch Verschleiß nicht mehr in der Lage sein, einen ausreichenden Innendurchmesser zu erzeugen, so wird das nicht ausreichend aufgebohrte Werkstück aus dem Materialfluss abgezogen. Im Beispielsfall wird als Kontrolleinrichtung eine Scheibe verwendet, die einen Außendurchmesser besitzt, welcher in den kleinsten, für die Absicherung des Honprozesses noch möglichen Bohrungsdurchmesser gerade noch eingefahren werden kann. Ein binäre Sensor erfasst mit Hilfe einer Endlagenkontrolle, ob die Kontrolleinrichtung in die Bohrung vollständig eingefahren ist. Ist die Bohrung zu eng, so kann die Scheibe nicht eingeführt werden, so dass vom Endlagensensor kein Freigabesignal (Gutsignal) abgegeben wird.

Werkstücke mit ausreichendem Innenmaß der feingebohrten Bohrung werden derart in die gestrichelt gezeichnete Bearbeitungsposition unterhalb der ersten Honeinheit 141A verfahren, dass das Honwerkzeug 148A durch Absenken der Honspindel in die feingebohrte Bohrung eingefahren werden kann.

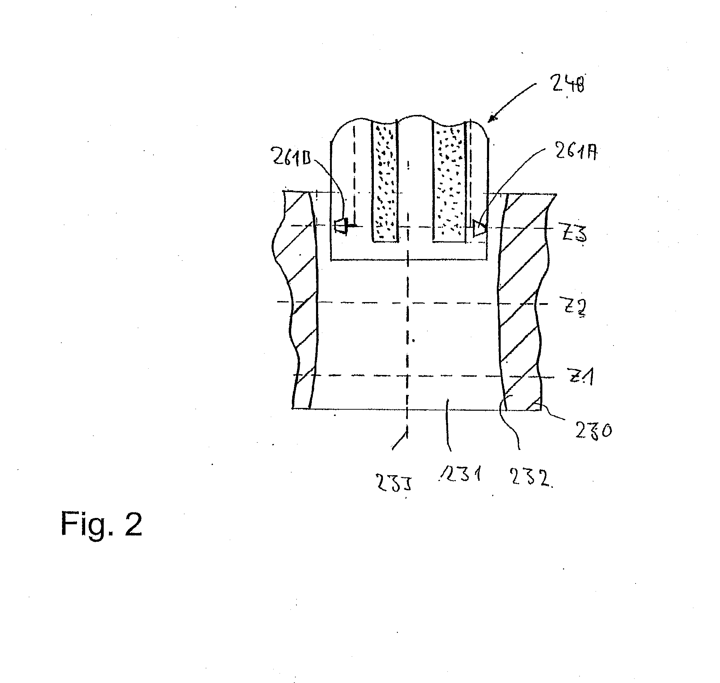

Danach wird das erste Honwerkzeug 148A durch Absenken der ersten Honspindel 142A in die feingebohrte Bohrung eingeführt. Mit Hilfe der Messeinrichtung 160 wird dann eine quantitative dimensionelle Vermessung der feingebohrten Bohrung durchgeführt, wobei das Messergebnis in Form von Bohrungs-Messsignalen an die Steuerung 180 der Honeinrichtung geleitet wird. Diese ist so konfiguriert, dass das Bohrungs-Messsignal bzw. ein daraus abgeleitetes Signal an die Feinbohr-Steuereinheit 126 weitergeleitet werden kann, so dass die Feinbohreinrichtung 120 über die Feinbohr-Steuereinheit in Abhängigkeit von dem Bohrungs-Messsignal gesteuert werden kann. Ein Beispiel für eine hochgenaue dimensionelle Vermessung einer feingebohrten Bohrung wird anhand von Fig. 2 näher erläutert.

In vielen Fällen liegen zwischen dem programmgesteuerten Start der Honoperation und dem Beginn eines substantiellen Materialabtrags durch das Honen einige Zehntelsekunden bis Sekunden, die dazu benötigt werden, die am Honwerkzeug vorhandenen, zustellbaren Bearbeitungselemente von ihrer zurückgezogenen Position radial nach außen in Bearbeitungseingriff mit der zu bearbeitenden Bohrungsinnenwand zu bringen. Innerhalb dieses Zeitfensters ist das Honwerkzeug zwar schon teilweise oder ganz in die Bohrung eingefahren, der Materialabtrag hat aber noch nicht begonnen, so dass die feingebohrte Bohrung noch nicht oder nicht wesentlich verändert ist. Bei vorteilhaften Varianten wird auch diese Zeit zur Erfassung von Bohrungs-Messsignalen genutzt, so dass beispielsweise die Messung mindestens zeitweise zeitgleich mit der Zustellung der Bearbeitungswerkzeuge am Honwerkzeug stattfindet. Gegebenenfalls kann sich die Messung ohne Unterbrechung bis in die Anfangsphase der materialabtragenden Bearbeitung erstrecken, so dass gegebenenfalls ein nahtloser Übergang zwischen der Erfassung des Bohrungs-Messsignals zur Ausgangskontrolle der Feinbohroperation und einer In-Prozess-Messung der nachfolgenden Honbearbeitung stattfindet.

In allen Fällen dient die Messeinrichtung 160 der Honeinrichtung unmittelbar nach Abschluss der Feinbohroperation und noch vor Beginn der materialabtragenden Honoperation als Ausgangskontrolle zur Überprüfung des Bearbeitungsergebnisses der Feinbohroperation und gleichzeitig als Eingangskontrolle für die nachfolgende Honoperation. Ergibt das Bohrungs-Messsignal, dass die durch das Feinbohren erzielte Makroform der feingebohrten Bohrung nicht innerhalb eines vorgegebenen Toleranzbereiches liegt, so kann der Betrieb der Feinbohreinrichtung beispielsweise durch Verstellen der radialen Anschlagsposition der Bohrerspitze 129 so gesteuert werden, dass bei der nachfolgenden Bearbeitung eines nächsten Werkstückes die resultierende Makroform der feingebohrten Bohrung nach Abschluss der Feinbohroperation im gewünschten Toleranzbereich liegt. Nach dieser Ausgangskontrolle des Feinbohrens und Eingangskontrolle für die Honoperationen beginnt die mit Hilfe der ersten Honeinheit 141A durchgeführte Vorhonoperation, mit der die Innenfläche 132 der Bohrung 131 eine gegenüber dem Feinbohren geänderte Oberflächenstruktur (mit überkreuzten Bearbeitungsspuren) sowie eine näher bei der Sollform liegende Makroform mit geringfügig größerem Innendurchmesser erhält. Das Bearbeitungsergebnis der Vorhonoperation kann während des Vorhonens und/oder nach Abschluss des Vorhonens mit Hilfe der Messeinrichtung 160 überprüft werden. Insbesondere kann auf Basis des entsprechenden Messsignals die Vorhonoperation beendet werden, wenn die nach dem Vorhonen angestrebte Makroform bzw. der nach dem Vorhonen angestrebte Durchmesser der Bohrung erreicht ist.

Anschließend wird das erste Honwerkzeug 148A aus der Bohrung ausgefahren und das Werkstück wird in eine der zweiten Honeinheit 141 B zugeordnete Bearbeitungsposition bewegt, die eine Einführung des zweiten Honwerkzeuges 148B in die Bohrung erlaubt. Nach Absenken des zweiten Honwerkzeuges 148B in die Bohrung wird die materialabtragende Fertighonoperation durchgeführt, durch die die Bohrung die gewünschte Sollform und Oberflächenstruktur erhält. Auch die Fertighonoperation kann mit Hilfe einer Messeinrichtung überwacht und gegebenenfalls in Abhängigkeit eines entsprechenden Messsignals gesteuert werden.

Nach Abschluss der Fertighonoperation und Zurückziehen der zweiten Honspindel aus dem Werkstück wird das Werkstück in Richtung der Nachmesseinrichtung 170 verfahren, die dazu eingerichtet ist, die fertige feinbearbeitete Bohrung 131 zu vermessen und zu überprüfen, ob der Durchmesser, die Makroform der Bohrung 131 und/oder die Oberflächenstruktur der Innenfläche 132 den Spezifikationen des Bearbeitungsprozesses genügen. Durch eine Rückführung entsprechender Nachmess-Signale zur Steuerung 180 der Honmaschine ist eine Verbesserung der Konstanz des Bearbeitungsverfahrens erzielbar, so dass Streuungen in der Qualität bearbeiteter Bohrung im Vergleich zu herkömmlichen Bearbeitungsanlagen verringert werden können.

Ein Beispiel für eine hochgenaue dimensionelle Vermessung einer feingebohrten Bohrung 231 in einem Werkstück 230 wird anhand von Fig. 2 näher erläutert. Die idealerweise kreiszylindrische Innenfläche 232 hat durch den Feinbohrprozess eine von einer Kreiszylinderform signifikant abweichende Form mit einer Taille im axialen Mittelbereich der Bohrung sowie mit Durchmessererweiterungen zu den jeweiligen offenen Endbereichen der Bohrung erhalten. Nachdem das Werkstück in den Bereich der ersten Honeinheit verfahren wurde, wird das Honwerkzeug 248 so weit in die Bohrung 231 abgesenkt, bis die diametral gegenüberliegenden Luftmessdüsen 261A, 261 B der Messeinrichtung eine Messebene Z3 in der Nähe des spindelzugewandten, oberen Eingangsbereichs der Bohrung 231 erreicht haben. Nachdem die vertikale Vorschubbewegung gestoppt wurde, wird das Honwerkzeug 248 in der Bohrung im Wesentlichen symmetrisch um die Bohrungsachse 233 herum um mindestens 180° gedreht, um den Durchmesser der Bohrung auf Ebene Z3 zu bestimmen. Mit Hilfe eines Drehwertgebers für die Honspindel ist es möglich, die den Durchmesserwerten zugeordneten Drehwinkelwerte des Honwerkzeuges zu erfassen, so dass auch eine winkelauflösende Messung des Durchmessers im Bereich der jeweiligen Messebene möglich ist. Hieraus sind Informationen über die Bohrungsform in der Messebene ableitbar. Nach Abschluss der Messung wird das Honwerkzeug weiter abgesenkt, so dass die Messsensoren 261A, 261 B im axialen Zentralbereich der Bohrung bei der Messebene Z2 liegen. Anschließend wird der entsprechende, gegebenenfalls winkelauflösende Durchmesser-Messvorgang wiederholt. Eine dritte Messung findet danach auf Ebene Z1 in der Nähe des spindelabgewandten Endes der Bohrung statt. Die Messergebnisse werden zur Bestimmung der Makroform der Bohrung ausgewertet. Ergibt diese Auswertung, dass die Makroform außerhalb der für die in Feinbohrvorgang vorgegebene Spezifikation liegt, so wird das Feinbohrwerkzeug durch Verlagerung der Bohrerspitze neu eingestellt oder ausgewechselt, um am nachfolgenden Werkstück eine Makroform der feingebohrten Bohrung innerhalb der Spezifikation zu erhalten.

Mit der Bearbeitungsanlage und dem beschriebenen Verfahren ist es möglich, einen sehr stabilen Bearbeitungsprozess zu fahren, bei dem die bearbeiteten Werkstücke nur sehr geringen Qualitätsschwankungen unterworfen sind. Eventuelle, vor allem durch Verschleiß der Bearbeitungswerkzeuge entstehende Abweichungen vom idealen Bearbeitungsprozess können zeitnah erkannt und mit Hilfe der Rückführung entsprechender Messsignale an die einzelnen Bearbeitungseinheiten durch Verstellung der Bearbeitungswerkzeuge und/oder Auswechslung von Bearbeitungswerkzeugen kurzfristig kompensiert werden.

In einer bevorzugten Ausgestaltung der Bearbeitungsanlage ist vorgesehen, dass zur Ankopplung des für die Eingangshonbearbeitung verwendete Honwerkzeug an die Honspindel eine Doppelgelenkstange vorgesehen ist, wobei eine Antriebsstange über ein oberes (oder erstes) Gelenk an die Honspindel und das Honwerkzeug über ein unteres (oder zweites) Gelenk an die Antriebsstange ankoppelbar ist.

Vorteilhafter Weise ist die Bearbeitungsanlage so ausgestaltet, dass vor der Ausgangsfeinbohrbearbeitung für die Bearbeitung der Bohrung nur genau eine weitere Bohrbearbeitung, insbesondere eine Grobbohrbearbeitung mit einem Grobbohrwerkzeug vorgesehen ist.

Eine weitere bevorzugte Ausgestaltung der Bearbeitungsanlage sieht vor, dass das bei der Ausgangsfeinbohrbearbeitung verwendete Feinbohrwerkzeug ein oder mehrere aussteuerbare Schneiden und eine oder mehrere feste Schneiden aufweist, die derart in Bezug aufeinander axial versetzt angeordnet sind, dass die festen Schneiden bei einem in die Bohrung hinein verlaufenden Vorwärtshub vorauseilen.

Günstiger Weise ist die Bearbeitungsanlage so ausgestaltet, dass das bei der Ausgangsfeinbohrbearbeitung verwendete Feinbohrwerkzeug mehrere in Umfangsrichtung zueinander versetzte, aussteuerbare Schneiden und keine feste Schneide aufweist, wobei vorzugsweise fünf aussteuerbare Schneiden vorgesehen sind.

In einer vorteilhaften Ausgestaltung der Bearbeitungsanlage ist vorgesehen, dass bei der Ausgangsfeinbohrbearbeitung ein Zweifachschnittverfahren unter Verwendung eines Feinbohrwerkzeugs mit mindestens einer aussteuerbaren und mindestens eine feste Schneide vorgesehen ist, wobei bei einem in die Bohrung hinein verlaufenden Vorwärtshub die aussteuerbare Schneide zurückgezogen und nur die feste Schneide in Eingriff mit der Bohrung ist und bei einem aus der Bohrung heraus verlaufenden Rückwärtshub die aussteuerbare Schneide derart ausgefahren ist, dass nur die aussteuerbare Schneide in Eingriff mit der Bohrung ist.

Die Erfindung wurde anhand eines Ausführungsbeispiels erläutert, bei dem die Honeinrichtung nach dem Feinbohren zumindest in der ersten Honoperation eine Honbearbeitung mit axial oszillierender und rotatorischer Bewegung des Honwerkzeuges ausführt. Bei anderen Ausführungsformen sind an der Honeinrichtung weitere Einrichtungen zur Erzeugung definierter Oberflächeneigenschaften vorgesehen. Beispielsweise kann eine Lasereinheit integriert sein, um eine Oberflächenstrukturierung mittels Laserstrahlung durchzuführen. Laserbestrahlung kann auch genutzt werden, um oberflächennahe Bereiche der bearbeiteten Werkstückoberfläche durch Energieeintrag großflächig umzuwandeln, beispielsweise zu härten. Es kann auch eine Bürsteinrichtung zum Bürsten der Oberflächen integriert sein. Bei anderen Ausführungsformen kann bei der Erzeugung definierter Oberflächenstrukturen und anderer definierter Oberflächeneigenschaften völlig auf das klassische Honen verzichtet werden, indem beispielsweise eines oder mehrere der genannten Verfahren zur abschliessenden Oberflächen-Feinstbearbeitung in der Honeinrichtung genutzt werden. Die Begriffe "Honeinrichtung" und "Honwerkzeug" stehen somit stellvertretend für Endbearbeitungsverfahren bzw. Endbearbeitungswerkzeuge, die nach einer Feinbohroperation eingesetzt werden können, um die feingebohrte Bohrung spanabhebend oder ohne Spanabtrag zu bearbeiten und in einen angestrebten Endzustand zu bringen.

Die Honeinrichtung ist mehrstufig, z.B. zwei-, oder dreistufig ausgebildet und umfasst daher eine entsprechende Anzahl von hintereinander angeordneten Honeinheiten, die auch redundant ausführbar sind.

## Patentansprüche

1. Verfahren zur Feinbearbeitung von Innenflächen von Bohrungen in Werkstücken durch Feinbohren und nachfolgendes Honen mit folgenden Schritten:

   Feinbohren mindestens einer Bohrung eines Werkstückes mittels eines Feinbohrwerkzeuges einer Feinbohreinrichtung zur Erzeugung einer feingebohrten Bohrung;
   Transfer des Werkstückes in eine Honeinrichtung zur Bearbeitung der feingebohrten Bohrung mittels eines Honwerkzeuges der Honeinrichtung;
   Messen der feingebohrten Bohrung mittels einer der Honeinrichtung zugeordneten Messeinrichtung zur Erzeugung mindestens eines die Eigenschaften der feingebohrten Bohrung repräsentierenden Bohrungs-Messsignals; und
   Steuerung des Betriebs der Feinbohreinrichtung in Abhängigkeit von dem Bohrungs-Messsignal, **dadurch gekennzeichnet, dass** eine dem Transfer unmittelbar vorgeschaltete Ausgangsfeinbohrbearbeitung als Semi-Finishbearbeitung ausgelegt ist und mit einem Feinbohrwerkzeug durchgeführt wird, das mindestens eine aussteuerbare Schneide aufweist, wobei die Position der aussteuerbaren Schneide in Abhängigkeit von dem Bohrungs-Messsignal gesteuert wird, und dass bei einer dem Transfer nachgeschalteten Eingangshonbearbeitung ein Aufmaß von mindestens 100$\mu$m abgetragen wird.

2. Verfahren nach Anspruch 1, **dadurch gekennzeichnet, dass** bei der Eingangshonbearbeitung, bezogen auf den Durchmesser der Bohrung, ein Aufmaß von maximal 400 $\mu$m abgetragen wird, wobei das durch die Eingangshonbearbeitung abgetragene maximale Aufmaß vorzugsweise weniger als 300 $\mu$m beträgt.

3. Verfahren nach einem oder mehreren der vorhergehenden Ansprüche, **dadurch gekennzeichnet, dass** das Messen der feingebohrten Bohrung mit der Messeinrichtung in der Bearbeitungsposition des Werkstücks in der Honeinrichtung erfolgt und/oder das Messen der feingebohrten Bohrung vor der Bearbeitung durch die Honeinrichtung erfolgt.

4.  Verfahren nach einem oder mehreren der vorhergehenden Ansprüche, **dadurch gekennzeichnet, dass** die Position der aussteuerbaren Schneide automatisch in Abhängigkeit von dem Bohrungs-Messsignal gesteuert wird.

5.  Verfahren nach einem oder mehreren der vorhergehenden Ansprüche, **dadurch gekennzeichnet, dass** die Ausgangsfeinbohrbearbeitung als positions- und winkelbestimmende Semi-Finishbearbeitung ausgelegt ist und/oder die Ausgangsfeinbohrbearbeitung für einen Abtrag von mehr als 0,3 mm ausgelegt ist und/oder nach Abschluss der Ausgangsfeinbohrbearbeitung die Bohrung ein Untermaß im Bereich von 100 - 400 $\mu$m, bevorzugt im Bereich von 0,2 mm +/- 0,05 mm hat.

6.  Verfahren nach einem oder mehreren der vorhergehenden Ansprüche, **dadurch gekennzeichnet, dass** eine dynamische Verteilung der Zerspanarbeit zwischen der Ausgangsfeinbohrbearbeitung und der Honeinrichtung, beziehungsweise der Eingangshonbearbeitung mit der Maßgabe, dass die Standzeiten des Feinbohrwerkzeuges und des Honwerkzeuges einander angeglichen oder angepasst werden.

7.  Verfahren nach einem oder mehreren der vorhergehenden Ansprüche, **dadurch gekennzeichnet, dass** während der Eingangshonbearbeitung mindestens phasenweise Material mit einem spezifischen Zeitspanvolumen von mehr als 20 mm$^3$/s durch Zerspanung abgetragen wird und/oder .das Honwerkzeug während der Eingangshonbearbeitung mindestens phasenweise mit einer Drehzahl von mehr als 400 U/min gedreht wird, wobei die Drehzahl vorzugsweise mindestens phasenweise mehr als 800 U/min, insbesondere mehr als 1200 U/min beträgt und/oder das Honwerkzeug während der Eingangshonbearbeitung mindestens phasenweise mit einer maximalen Hubgeschwindigkeit von mehr als 20 m/min bewegt wird, wobei die maximale Hubgeschwindigkeit vorzugsweise mindestens phasenweise zwischen 30 m/min und 40 m/min beträgt.

8.  Verfahren nach einem oder mehreren der vorhergehenden Ansprüche, **dadurch gekennzeichnet, dass** während der Eingangshonbearbeitung das Honwerkzeug zumindest innerhalb eines Bearbeitungszeitintervalles derart angetrieben wird, dass eine Schnittgeschwindigkeit die Schneidkörper des Honwerkzeuges relativ zur Innenfläche der Bohrung mehr als 100 m/min beträgt, wobei vorzugsweise die Schnittgeschwindigkeit während des Bearbeitungszeitintervalles mindestens phasenweise im Bereich zwischen 200 m/min und 300 m/min liegt und/oder die Eingangshonbearbeitung für eine Bohrung mit Durchmesser D innerhalb einer Honzeit H durchgeführt wird, für die die Bedingung

$$H < 25\ s * D/75$$

gilt.

9.  Verfahren nach einem oder mehreren der vorhergehenden Ansprüche, **dadurch gekennzeichnet, dass** zur Ankopplung des für die Eingangshonbearbeitung verwendeten Honwerkzeuges an die Honspindel mit einer Doppelgelenkstange gearbeitet wird, wobei eine Antriebsstange über ein oberes Gelenk an die Honspindel angekoppelt wird und das Honwerkzeug über ein unteres Gelenk an die Antriebsstange angekoppelt wird oder für die Eingangshonbearbeitung ein Honwerkzeug verwendet wird, das starr an die Honspindel oder an eine starre Antriebsstange angekoppelt ist, wobei vorzugsweise das Honwerkzeug in die zu bearbeitende Bohrung zentrisch in Bezug auf eine Sollposition der Bohrungsachse eingeführt wird.

10. Verfahren nach einem oder mehreren der vorhergehenden Ansprüche, **dadurch gekennzeichnet, dass** vor der Ausgangsfeinbohrbearbeitung für die Bearbeitung der Bohrung nur genau eine weitere Bohrbearbeitung, insbesondere eine Grobbohrbearbeitung mit einem Grobbohrwerkzeug vorgesehen ist, wobei vorzugsweise die Grobbohrbearbeitung für einen Abtrag von mindestens 2 bis 3 mm, maximal 6 bis 8 mm ausgelegt ist.

11. Verfahren nach einem oder mehreren der vorhergehenden Ansprüche, **dadurch gekennzeichnet, dass** die Ausgangsfeinbohrbearbeitung so durchgeführt wird, dass nach Abschluss der Ausgangsfeinbohrbearbeitung die Bohrung eine Rundheit im Bereich bis zu 0,08 mm, bevorzugt bis 0,05 mm hat, insbesondere im Bereich von 0,03 bis 0,05 mm und/oder die Ausgangsfeinbohrbearbeitung so durchgeführt wird, dass nach Abschluss der Ausgangsfeinbohrbearbeitung die Bohrung eine Geradheit im Bereich bis zu 0,08 mm, bevorzugt bis 0,05 mm hat, insbesondere im Bereich von 0,03 bis 0,05 mm und/oder die Ausgangsfeinbohrbearbeitung so durchgeführt wird, dass nach Abschluss der Ausgangsfeinbohrbearbeitung die Bohrung eine Parallelität im Bereich bis zu 0,08 mm, bevorzugt bis 0,05 mm hat, insbesondere im Bereich von 0,03 bis 0,05 mm und/oder die Ausgangsfeinbohrbearbeitung so durchgeführt wird, dass nach Abschluss der Ausgangsfeinbohrbearbeitung die Innenfläche der Bohrung eine mittlere Rauheit im Bereich von 20 $\mu$m $\leq R_z \leq$ 100 $\mu$m, insbesondere 25 $\mu$m $\leq R_z \leq$ 80 $\mu$m, bevorzugt von 30 $\mu$m $\leq R_z \leq$ 50 $\mu$m hat.

12. Verfahren nach einem oder mehreren der vorhergehenden Ansprüche, **dadurch gekennzeichnet, dass** das bei der Ausgangsfeinbohrbearbeitung verwendete Feinbohrwerkzeug ein oder mehrere aussteuerbare Schneiden und eine oder mehrere feste Schneiden hat, die derart in Bezug aufeinander axial versetzt angeordnet sind, dass die festen Schneiden bei einem in die Bohrung hinein verlaufenden Vorwärtshub vorauseilen oder das bei der Ausgangsfeinbohrbearbeitung verwendete Feinbohrwerkzeug mehrere in Umfangsrichtung zueinander versetzte, aussteuerbare Schneiden und keine feste Schneide aufweist, wobei vorzugsweise fünf aussteuerbare Schneiden vorgesehen sind.

13. Verfahren nach einem oder mehreren der vorhergehenden Ansprüche, **dadurch gekennzeichnet, dass** bei der Ausgangsfeinbohrbearbeitung ein Zweifachschnittverfahren unter Verwendung eines Feinbohrwerkzeugs mit mindestens einer aussteuerbaren und mindestens eine festen Schneide durchgeführt wird, wobei bei einem in die Bohrung hinein verlaufenden Vorwärtshub die aussteuerbare Schneide zurückgezogen und nur die feste Schneide in Eingriff mit der Bohrung ist und bei einem aus der Bohrung heraus verlaufenden Rückwärtshub die aussteuerbare Schneide derart ausgefahren ist, dass nur die aussteuerbare Schneide in Eingriff mit der Bohrung ist.

14. Bearbeitungsanlage (100) zum Feinbearbeiten zylindrischer Innenflächen von Bohrungen in Werkstücken (130) durch Feinbohren und nachfolgendes Honen mit einer Feinbohreinrichtung (120) mit mindestens einer zum Tragen eines Feinbohrwerkzeuges (128) eingerichteten Feinbohrspindel (122) sowie einer Feinbohrsteuerung (126) zur Steuerung des Betriebs der Feinbohreinrichtung und einer Honeinrichtung (140) mit mindestens einer zum Tragen eines Honwerkzeugs (148A, 148B) eingerichteten Honspindel (142A, 142B) sowie einer Honsteuerung (180) zur Steuerung des Betriebs der Honeinrichtung, wobei die Honeinrichtung mindestens eine Messeinrichtung (160) zur Messung einer durch die Feinbohreinrichtung (120) bearbeiteten feingebohrten Bohrung und zur Erzeugung eines die Eigenschaften der feingebohrten Bohrung repräsentierenden Bohrungs-Messsignals aufweist und die Feinbohrsteuerung (126) zur Steuerung des Betriebs der Feinbohreinrichtung in Abhängigkeit von dem Bohrungs-Messsignal konfiguriert ist, **dadurch gekennzeichnet, dass** die Bearbeitungsanlage insbesondere zur Durchführung des Verfahrens nach einem der vorhergehenden Ansprüche konfiguriert ist.

15. Bearbeitungsanlage nach Anspruch 14, **dadurch gekennzeichnet, dass** das Feinbohrwerkzeug (128) eine von einem Verstellantrieb (301) bewegbare Schneide (129) aufweist und der Verstellantrieb (301) über eine Steuerleitung (303) mit einer Steuerung (180) oder Feinbohr-Steuereinheit (126) verbunden ist und die Steuerung (180) oder Feinbohr-Steuereinheit (126) eine Korrekturposition aufgrund des Bohrungs-Messsignals an den Verstellantrieb (301) überträgt, welcher die Schneide (129) entsprechend positioniert.

Fig. 1

Fig. 2

**EP 2 476 510 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   WO 2008009411 A